# EUROPÄISCHE PATENTSCHRIFT

(11) **EP 2 252 022 B1**
(45) Veröffentlichungstag und Bekanntmachung des Hinweises auf die Patenterteilung: **26.08.2015**
(21) Anmeldenummer: 10174952.1
(22) Anmeldetag: 14.11.2000
(51) Int. Cl.: H04L 12/58, H04L 29/06

(54) **Verfahren zur Übertragung von elektronischen Postnachrichten**
Method for the transmission of email messages
Procédé de transmission de courriers électroniques

(30) Priorität: 17.12.1999 DE 19961345
(43) Veröffentlichungstag der Anmeldung: 17.11.2010
(62) Teilanmeldung aus: 06110516.9
(73) Patentinhaber: IPCom GmbH & Co. KG, 82049 Pullach (DE)
(72) Erfinder: Laumen, Joseph, 81541, München (DE); Schmidt, Gunnar, 78078, Niederschach (DE)
(74) Vertreter: Molnia, David

(56) Entgegenhaltungen:
- WO-A-99/52247
- WO-A2-98/56195
- "SMS E-Mail Parameters, T2(99)-1068 Change Request to 23.040" INTERNET CITATION 26. November 1999 (1999-11-26), Seiten 1-5, XP002382366 Gefunden im Internet: URL:http://www.3gpp.org/ftp/tsg_t/WG2_Capa bility/TSGT2_07/Docs/T2-991068%20SMS%20e-m ail%20parameters.zip [gefunden am 2006-05-23]
- "3rd Generation Partnership Project; Technical Specification Group Terminals; Technical realization of the Short Message Service (SMS); Point-to-Point (PP) (3G TS 23.040 version 3.2.0)" 3GPP STANDARD; 3G TS 23.040, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, Nr. V3.2.0, 1. Oktober 1999 (1999-10-01), Seiten 1-118, XP050362106
- SMALE S: "HP OPENMAIL SHORT MESSAGE SERVICE (SMS) GATEWAY: TH MOBILE PHONE AS AN E-MAIL CLIENT-OF-CHOISE", INTERNATIONAL WORKSHOP ON MOBILE MULTI-MEDIA COMMUNICATIONS, XX, XX, 11 April 1995 (1995-04-11), pages 1-06, XP000671022,
- MARTINI G ET AL: "DISTRIBUTED ARCHITECTURE FOR APPLICATIONS BASED ON THE GSM SHORT MESSAGE SERVICE", INTERNATIONAL WORKSHOP ON SERVICES IN DISTRIBUTED ANDNETWORKED ENVIRONMENTS, XX, XX, 5 June 1995 (1995-06-05), pages 140-145, XP000612264, DOI: 10.1109/SDNE.1995.470452
- COLLESI S ET AL: "SMS BASED APPLICATIONS FOR GSM NETWORKS", TECHNICAL REPORTS - CSELT, TURIN, IT, vol. 23, no. 3, 1 June 1995 (1995-06-01), pages 337-349, XP000573777, ISSN: 0393-2648

## Beschreibung

### Stand der Technik

Die Erfindung geht von einem Verfahren zur Übertragung von elektronischen Postnachrichten nach der Gattung des Hauptanspruchs aus.

Aus den Veröffentlichungen "Technical realisation of the Short Message Service (SMS); Point-to-Point (PP)", GSM 03.40 V7.1.0 (1998-11) und 3G 23.040 V3.2.0 (1999-10) ist bereits ein Verfahren zur Übertragung von Internet-E-Mails unter Verwendung des SMS-Kurznachrichtendienstes (Short Message Service) bekannt, wobei mit einer SMS-Kurznachricht in einem Telekommunikationsnetz eine Internet-E-Mail sowie Adress- und Identifikationsdaten für die Übertragung der Internet-E-Mail im Internet übertragen werden. Der Standard gemäß den genannten Veröffentlichungen sieht die Möglichkeit vor, über den Kurznachrichtendienst SMS Internet E-Mails zu versenden und zu empfangen. Hierzu muss beim Versenden ein so genannter Signalisierungseintrag PID (Protocol Identifier) in einer Kopfinformation der SMS-Kurznachricht entsprechend eingestellt werden, um auf die mit der Kurznachricht übertragene Internet-E-Mail hinzuweisen. Der Datenteil der SMS-Kurznachricht beginnt dabei mit der Zieladresse für die Internet-E-Mail. Beim Empfangen von Internet-E-Mails über den SMS-Kurznachrichtendienst ist die Zieladresse von einer Netzwerkeinheit durch die Quelladresse des Absenders ersetzt worden. Die Trennung zwischen Internet-E-Mail Ziel- oder Quelladresse und der eigentlichen Internet-E-Mail in der SMS-Kurznachricht ist einfach ein Leerzeichen.

Optional unterstützt der Standard gemäß den genannten Veröffentlichungen die Angabe von mehreren Zieladressen, die durch Kommata getrennt werden müssen, sowie die Datenfelder "Subject" zur Angabe des Titels der Internet-E-Mail und "Real Name" zur Angabe des eigentlichen Namens des Absenders. Als Trennungszeichen zwischen diesen Datenfeldern ist dabei vorgesehen, das Datenfeld "Subject" in Klammern zu setzen oder durch zwei vorangestellte Sonderzeichen, wie beispielsweise "##" zu kennzeichnen. Das Datenfeld "Real Name" wird durch ein Sonderzeichen, beispielsweise "#" gekennzeichnet.

In dem Dokument "SMS E-Mail Parameters, T299-1068 Change Request to 23.040", 3GPP/SMG Meeting T2 Nr. 7, ETSI SMG4, November 1999 wird vorgeschlagen, den Standard gemäß den genannten Veröffentlichungen derart zu erweitern, dass ausgewählte Parameter einer E-Mail, wie beispielsweise die E-Mail-Adresse oder der Titel der E-Mail, in jeweils einem eigenen Informationselement des User-Data-Headers einer SMS-Kurznachricht übertragen werden können.

### Vorteile der Erfindung

Das erfindungsgemäße Verfahren zur Übertragung von elektronischen Postnachrichten mit den Merkmalen des Hauptanspruchs hat demgegenüber den Vorteil, dass mit der Kurznachricht eine erste Kopfinformation mit einer Signalisierung mindestens eines Datenfeldes übertragen wird, das die Adress- und/oder Identifikationsdaten umfassen, dass eine zweite Kopfinformation mit der Kurznachricht übertragen wird, die auf das Vorhandensein der ersten Kopfinformation hinweist, und dass das mindestens eine Datenfeld innerhalb eines Datenteils der Kurznachricht außerhalb jeder Kopfinformation übertragen werden. Auf diese Weise kann ein erster Diensteanbieter des ersten Kommunikationsnetzes in Abhängigkeit einer Auswertung der zweiten Kopfinformation die Kurznachricht an einen zweiten Diensteanbieter des zweiten Kommunikationsnetzes weiterleiten, der dann anhand der ersten Kopfinformation eine weitere Auswertung der Kurznachricht zur Extraktion der elektronischen Postnachricht aus der Kurznachricht und zur Weiterleitung der elektronischen Postnachricht über das zweite Kommunikationsnetz vornehmen kann. Es ist somit nicht erforderlich, dass der erste Diensteanbieter des ersten Kommunikationsnetzes gleichzeitig Diensteanbieter des zweiten Kommunikationsnetzes ist.

Mittels der ersten Kopfinformation kann außerdem auf eine spezielle Form der Adressierung der elektronischen Postnachricht hingewiesen werden, die bei der Extraktion der elektronischen Postnachricht durch den zweiten Diensteanbieter berücksichtigt werden kann. Die Form der Adressierung lässt sich somit flexibel wählen. Voraussetzung ist lediglich, dass der zweite Diensteanbieter die jeweils angegebene Form der Adressierung der elektronischen Postnachricht kennt und somit für die Extraktion und Weiterleitung der elektronischen Postnachricht auswerten kann.

Durch die in den Unteransprüchen aufgeführten Maßnahmen sind vorteilhafte Weiterbildungen und Verbesserungen des im Hauptanspruch angegebenen Verfahrens möglich.

Besonders vorteilhaft ist es, dass das mindestens eine Datenfeld durch ein Schlüsselwort für die Übertragung in der ersten Kopfinformation gekennzeichnet wird. Auf diese Weise lassen sich mehrere Datenfelder mit geringem Aufwand eindeutig unterscheiden.

Ein weiterer Vorteil besteht darin, dass das Schlüsselwort codiert übertragen wird. Auf diese Weise wird die Beeinträchtigung der Datenkapazität der Kurznachricht durch die Übertragung eines oder mehrerer Schlüsselwörter auf ein Minimum reduziert.

Besonders vorteilhaft ist es, dass mit der ersten Kopfinformation ein Kennzeichnungsdatenfeld übertragen wird, das die Form der Adress- und/oder Identifikationsdaten angibt. Auf diese Weise wird eine fehlerfreie Auswertung des mindestens einen Datenfeldes im zweiten Diensteanbieter gewährleistet, so dass die in der Kurznachricht enthaltene elektronische Postnachricht an den oder die richtigen Empfänger im zweiten Kommunikationsnetz übertragen werden kann.

Ein weiterer Vorteil besteht darin, dass mindestens eine dritte Kopfinformation mit der Kurznachricht übertragen wird, die die elektronische Postnachricht als Teil einer mittels Übertragung mehrerer Kurznachrichten verketteten gesamten elektronischen Postnachricht kennzeichnet. Auf diese Weise ist es insbesondere bei auf eine vorgegebene Datenmenge beschränkten Kurznachrichten möglich, dennoch eine die vorgegebene Datenmenge überschreitende elektronische Postnachricht durch Verkettung mehrerer Kurznachrichten im ersten Kommunikationsnetz zu versenden, wobei die elektronischen Postnachrichten der über die mindestens eine dritte Kopfinformation miteinander verketteten Kurznachrichten im zweiten Diensteanbieter zu einer gesamten elektronischen Postnachricht zusammengefügt und an mindestens eine in einem Datenfeld angegebene zweite Zieladresse versendet werden können.

### Zeichnung

Ausführungsbeispiele der Erfmdung sind in der Zeichnung dargestellt und in der nachfolgenden Beschreibung näher erläutert. Es zeigen Figur 1 eine Übertragungsstrecke von einem Sender zu einem Empfänger, Figur 2 ein erstes Beispiel für einen schematischen Aufbau einer Kurznachricht mit integrierter elektronischer Postnachricht und Figur 3 ein zweites Beispiel für einen schematischen Aufbau einer Kurznachricht mit integrierter elektronischer Postnachricht.

### Beschreibung der Ausführungsbeispiele

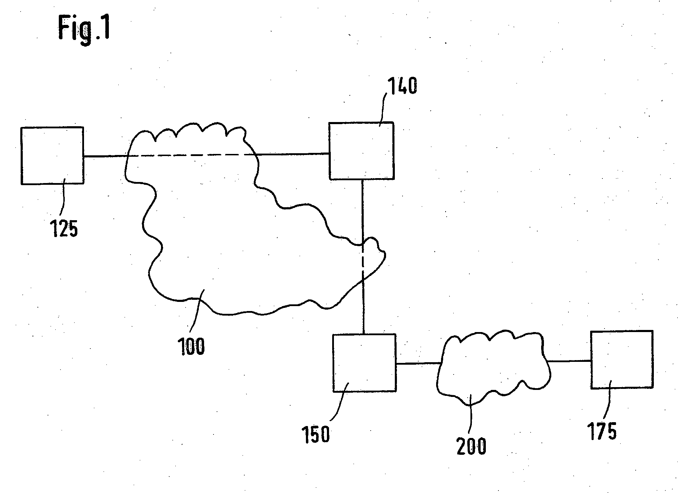

In Figur 1 kennzeichnet 125 einen Sender, der eine Kurznachricht mit integrierter elektronischer Postnachricht an einen ersten Diensteanbieter 140 über ein erstes Kommunikationsnetz 100 überträgt. Der erste Diensteanbieter 140 leitet die Kurznachricht über das erste Kommunikationsnetz 100 an einen zweiten Diensteanbieter 150 eines zweiten Kommunikationsnetzes 200 weiter. Der zweite Diensteanbieter 150 extrahiert aus der Kurznachricht die elektronische Postnachricht und leitet sie über das zweite Kommunikationsnetz 200 an einen Empfänger 175 weiter.

Der erste Diensteanbieter 140 und der zweite Diensteanbieter 150 sind hier als zwei getrennte Einheiten ausgeführt. Sie können jedoch auch in eine gemeinsame Einheit integriert sein.

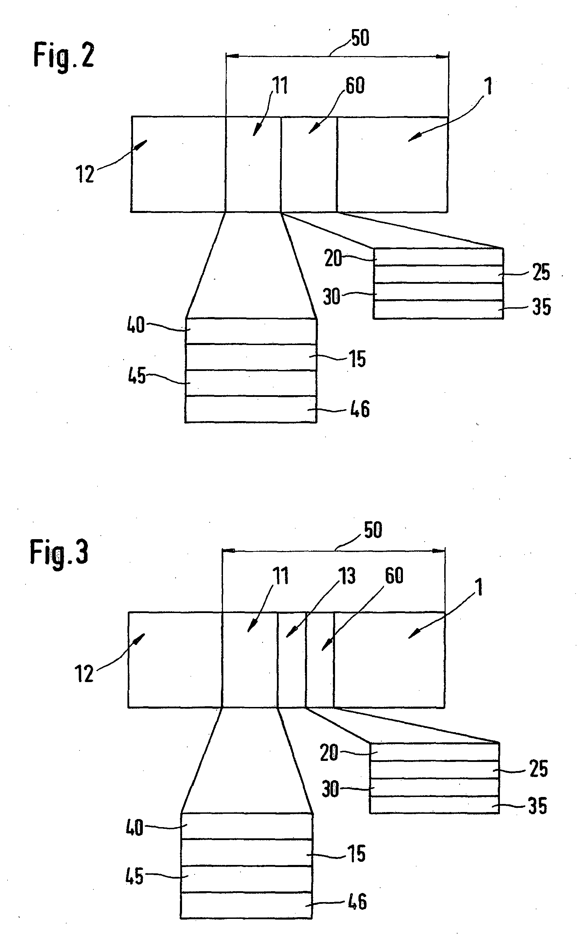

In der Figur 2 kennzeichnet 5 eine Kurznachricht. Die Kurznachricht 5 wird vom Sender 125 des ersten Kommunikationsnetzes 100 erzeugt und wie beschrieben über den ersten Diensteanbieter 140 des ersten Kommunikationsnetzes 100 an den zweiten Diensteanbieter 150 des zweiten Kommunikationsnetzes 200 unter Verwendung des ersten Kommunikationsnetzes 100 übertragen. Für die Übertragung solcher Kurznachrichten 5 wird dazu im ersten Kommunikationsnetz 100 ein sogenannter Kurznachrichtendienst eingerichtet. Ein solcher Kurznachrichtendienst existiert beispielsweise in einem als Mobilfunknetz ausgebildeten ersten Kommunikationsnetz 100. Dabei kann es sich bei einem solchen Mobilfunknetz beispielsweise um ein Mobilfunknetz nach dem GSM-Standard (Global System for Mobile Communications) oder nach dem UMTS-Standard (Universal Mobile Telecommunications System) handeln. Beim GSM-Mobilfunknetz ist der so genannte SMS-Kurznachrichtendienst (Short Message Service) spezifiziert, der die Versendung von SMS-Kurznachrichten zwischen einem Sender und einem Empfänger zur Verfügung stellt, wobei die SMS-Kurznachrichten auf Textnachrichten einer maximalen Textlänge von derzeit 160 Zeichen beschränkt sind. Sollen größere Textnachrichten übertragen werden, so bietet der SMS-Kurznachrichtendienst die Möglichkeit einer Verkettung mehrerer SMS-Kurznachrichten, d.h. die zu übertragende Textnachricht wird auf mehrere SMS-Kurznachrichten verteilt.

Die in der Figur 2 dargestellte Kurznachricht 5 umfasst grundsätzlich eine zweite Kopfinformation 12 und ein Datenteil 50. Die zweite Kopfinformation 12 umfasst Signalisierungseinträge sowie eine erste Zieladresse für die zu sendende Kurznachricht 5 bzw. eine Quelladresse für die zu empfangende Kurznachricht 5. Die erste Zieladresse kennzeichnet den ersten Diensteanbieter 140 der Kurznachricht 5 im ersten Kommunikationsnetz 100 und die Quelladresse kennzeichnet den Sender 125 der Kurznachricht 5 im ersten Kommunikationsnetz 100. Der Datenteil 50 umfasst die eigentlich zu übermittelnde Nachricht und damit die sogenannten Nutzdaten. Beim SMS-Kurznachrichtendienst werden dabei die Quelladresse bzw. die erste Zieladresse gemäß den Veröffentlichungen "Technical Realisation of the Short Message Service (SMS); Point-to-Point (PP)", GSM 03.40 V7.1.0 (1998-11) und "Technical Realisation of the Short Message Service (SMS); Point-to-Point (PP)", 3G 23.040 V3.2.0 (1999-10) über eine so genannte MSISDN-Nummer (Mobile Subscriber Integrated Services Digital Network) identifiziert. Bei der Übertragung der Kurznachricht 5 im ersten Kommunikationsnetz 100 adressiert eine in Figur 1 nicht dargestellte Netzwerkeinheit des ersten Kommunikationsnetzes 100 den ersten Diensteanbieter 140 der Kurznachricht 5 anhand der ersten Zieladresse und ersetzt diese durch die Quelladresse des Senders 125. Standardgemäß enthält dabei die zweite Kopfinformation 12 also genau eine Quelladresse oder genau eine erste Zieladresse.

Die Kurznachricht 5 umfasst gemäß der Figur 2 eine erste Kopfinformation 11, die im Datenteil 50 der Kurznachricht 5 angeordnet ist. Die erste Kopfinformation 11 wird beim SMS-Kurznachrichtendienst als Benutzerdatenkopfinformation oder "User Data Header" bezeichnet.

Das Vorhandensein der ersten Kopfinformation 11 im Datenteil 50 wird durch einen entsprechenden Signalisierungseintrag in der zweiten Kopfinformation 12 angezeigt. Beim SMS-Kurznachrichtendienst sind verschiedene Typen von "User Data Header" gemäß den genannten Veröffentlichungen "Technical Realisation of the Short Message Service (SMS); Point-to-Point (PP)" spezifiziert. Sie werden dabei durch ein Kennzeichnungsdatenfeld 15 in der ersten Kopfinformation 11 gemäß der Figur 2 voneinander unterschieden, wobei die Figur 2 den Aufbau der ersten Kopfinformation 11 detailliert darstellt.

Im Datenteil 50 der Kurznachricht 5 kann nun eine elektronische Postnachricht 1 übertragen werden. Der Signalisierungseintrag in der zweiten Kopfinformation 12 gibt dabei zusätzlich an, dass mit der Kurznachricht 5 eine solche elektronische Postnachricht übertragen wird. Dies wird vom ersten Diensteanbieter 140 nach Auswertung der zweiten Kopfinformation 12 erkannt. Er leitet daher die Kurznachricht an den zweiten Diensteanbieter 150 wie beschrieben weiter, da dieser als Diensteanbieter des zweiten Kommunikationsnetzes 200, das für die Übertragung solcher elektronischer Postnachrichten vorgesehen ist, fungiert und die Übertragung der elektronischen Postnachricht 1 im zweiten Kommunikationsnetz 200 somit veranlassen kann. Der erste Diensteanbieter 140 muss somit nicht gleichzeitig Diensteanbieter des zweiten Kommunikationsnetzes 200 geschweige denn Teilnehmer desselben sein. Die Kurznachricht 5 mit der elektronischen Postnachricht 1 wird also wie beschrieben zum zweiten Diensteanbieter 150 des zweiten Kommunikationsnetzes 200 über das erste Kommunikationsnetz 100 übertragen, wobei der zweite Diensteanbieter 150 auch Teilnehmer des zweiten Kommunikationsnetzes 200 ist. Die elektronische Postnachricht 1 soll nun vom zweiten Diensteanbieter 150 an den Empfänger 175 des zweiten Kommunikationsnetzes 200 übertragen werden. Dabei kann es sich bei dem zweiten Kommunikationsnetz 200 beispielsweise um das Internet handeln, wobei die elektronische Postnachricht 1 dann beispielsweise eine Internet-E-Mail darstellt.

Mit dem Datenteil 50 werden nun mehrere Datenfelder 20, 25, 30, 35 außerhalb jeglicher Kopfinformation übertragen, die Adress- und Identifikationsdaten für die Übertragung der elektronischen Postnachricht 1 im zweiten Kommunikationsnetz 200 umfassen. Nach Auswertung dieser Adress- und Identifikationsdaten im zweiten Diensteanbieter 150 kann die elektronische Postnachricht 1 an den Empfänger 175 des zweiten Kommunikationsnetzes 200 weitergeleitet werden. Dazu muss jedoch dem zweiten Diensteanbieter 150 der Kurznachricht 5 mitgeteilt werden, wie die Datenfelder 20, 25, 30, 35 aufgebaut sind bzw. ob solche Datenfelder 20, 25, 30, 35 im Datenteil 50 überhaupt vorhanden sind. Dies geschieht anhand des Kennzeichnungsdatenfeldes 15 in der ersten Kopfinformation 11. Dort gibt ein sogenannter Identifikator an, in welcher Weise die Adress- und Identifikationsdaten im Datenteil 50 vorliegen und signalisiert somit außerdem das Vorhandensein der Datenfelder 20, 25, 30, 35 überhaupt. Beispielsweise kann der Identifikator angeben, dass die Datenfelder 20, 25, 30, 35 im Datenteil 50 eine aus der Veröffentlichung "Standard for the Format of ARPA Internet Text Messages" IETF, RFC 822 bekannte Adressierung und Identifikation der elektronischen Postnachricht 1 umfassen. Gemäß der Figur 2 sind beispielhaft die Datenfelder 20, 25, 30, 35 für eine RFC 822-Adressierung gemäß der genannten Veröffentlichung dargestellt.

Der ersten Kopfinformation 11 ist ein erstes Längendatenfeld 40 vorangestellt, das die Länge UDHL (User Data Header Length) der ersten Kopfinformation 11 angibt. Dem ersten Längendatenfeld 40 folgt dann das bereits beschriebene Kennzeichnungsdatenfeld 15 mit dem Identifikator IEI (Information Element Identifier), der in diesem Fall angibt, dass die Datenfelder 20, 25, 30, 35 eine RFC 822-Adressierung darstellen. Das Kennzeichnungsdatenfeld 15 wird von einem zweiten Längendatenfeld 45 gefolgt, dass die Länge IEIDL (Information Element Identifier Data Length) eines dritten Längendatenfeldes 46 angibt. Das dritte Längendatenfeld 46 gibt die Länge der Datenfelder 20, 25, 30, 35 im Datenteil 50 an. Die Datenfelder 20, 25, 30, 35 selbst sind dann im Datenteil 50 außerhalb jeglicher Kopfinformation wie beschrieben angeordnet. Die Datenfelder 20, 25, 30, 35 werden dabei im Datenteil 50 der elektronischen Postnachricht 1 vorzugsweise unmittelbar vorangestellt übertragen. Mittels der Längenangabe im dritten Längendatenfeld 46 können dann die Datenfelder 20, 25, 30, 35 eindeutig von der elektronischen Postnachricht 1 im Datenteil 50 getrennt werden. Diese Trennung kann zusätzlich oder alternativ durch Verwendung eines für diesen Zweck vorgegebenen speziellen Trennungszeichens unterstützt werden, vorausgesetzt dieses Trennungszeichen wird sonst nicht in den Datenfeldern 20, 25, 30, 35 und der elektronischen Postnachricht 1 verwendet. Dazu ist in Figur 2 ein Bereich 60 nach der ersten Kopfinformation 11 und der elektronischen Postnachricht 1 im Datenteil 50 dargestellt, in dem die Datenfelder 20, 25, 30, 35 angeordnet sind. Die Datenfelder 20, 25, 30, 35 werden durch Schlüsselwörter voneinander unterschieden, wobei jedem Datenfeld 20, 25, 30, 35 ein Schlüsselwort zugeordnet ist. Diese Schlüsselworte sind dem zweiten Diensteanbieter 150 bekannt. Da aufgrund der vorgegebenen Schlüsselwörter eine eindeutige Identifizierung der Datenfelder 20, 25, 30, 35 gegeben ist, können je nach gewünschter Anwendung in ihrer Art und Anzahl verschiedene Datenfelder im Datenteil 50 angeordnet sein. Gemäß der Figur 2 sind vier Datenfelder 20, 25, 30, 35 vorgesehen. Es könnten jedoch auch mehr oder weniger sein. Ein erstes Datenfeld 20 ist dabei beispielhaft als Zieladressdatenfeld ausgebildet, das eine zweite Zieladresse der elektronischen Postnachricht 1 umfasst und damit den Empfänger 175 der elektronischen Postnachricht 1 im zweiten Kommunikationsnetz 200 kennzeichnet. Das Zieladressdatenfeld 20 ist daher für die Weiterleitung der elektronischen Postnachricht 1 im zweiten Kommunikationsnetz 200 unerlässlich, es kann jedoch aufgrund des zugeordneten Schlüsselwortes an beliebiger Stelle im Bereich 60 der Datenfelder 20, 25, 30, 35 angeordnet sein, da es anhand des Schlüsselwortes vom zweiten Diensteanbieter 150 eindeutig identifiziert wird. Entsprechendes gilt für alle anderen Datenfelder. Ein zweites Datenfeld 25 im Bereich 60 der Datenfelder 20, 25, 30, 35 kann dabei als Quelladressdatenfeld ausgebildet sein und die Quelladresse der elektronischen Postnachricht 1 umfassen, so dass beim Empfänger 175 der elektronischen Postnachricht 1 im zweiten Kommunikationsnetz 200 der Sender 125 der elektronischen Postnachricht 1 identifizierbar ist.

Ein drittes Datenfeld 30 im Bereich 60 der Datenfelder 20, 25, 30, 35 kann als Bezeichnungsdatenfeld ausgebildet sein, das eine Bezeichnung oder einen Titel der elektronischen Postnachricht 1 umfasst.

Ein viertes Datenfeld 35 im Bereich 60 der Datenfelder 20, 25, 30, 35 kann als Namensdatenfeld ausgebildet sein, das den Namen des Senders 125 der elektronischen Postnachricht 1 umfasst, jedoch nicht in Form der Quelladresse, sondern beispielsweise in Form eines Vor- und eines Nachnamens, also als persönlicher Name.

Die Zuordnung der Datenfelder zu den Schlüsselworten kann beispielsweise wie folgt aussehen: Dem Zieladressdatenfeld ist das Schlüsselwort "To" zugeordnet. Dem Quelladressdatenfeld 25 ist das Schlüsselwort "From" zugeordnet. Dem Bezeichnungsdatenfeld 30 ist das Schlüsselwort "Subject" zugeordnet. Das Namensdatenfeld 35 soll in diesem Beispiel nicht verwendet werden.

Im folgenden wird ein Beispiel für den Aufbau der Datenfelder 20, 25, 30 im Bereich 60 beschrieben. Dabei enthält zunächst die zweite Kopfinformation 12 den Signalisierungseintrag TP-UDHI (Transfer Protocol-User Data Header Identification), der angibt, ob die erste Kopfinformation 11 und damit eine elektronische Postnachricht 1 in der Kurznachricht 5 vorliegt. Ist dies der Fall, so ist TP-UDHI auf 1 gesetzt, andernfalls ist TP-UDHI auf 0 gesetzt. Die erste Kopfinformation 11 kann dann beispielsweise wie folgt aufgebaut sein: Im ersten Längendatenfeld 40 ist die Länge UDHL der ersten Kopfinformation 11 auf 3 im Hexadezimalsystem gesetzt. Im Kennzeichnungsdatenfeld 15 ist der Identifikator IEI auf 20 im Hexadezimalsystem gesetzt und signalisiert durch diesen Wert das Vorhandensein von Datenfeldern 20, 25, 30 im Bereich 60 und die beschriebene RFC 822-Adreßierung gemäß einer entsprechenden Zuordnungstabelle. Im zweiten Längendatenfeld 45 ist die Länge IEIDL auf Eins im Hexadezimalsystem gesetzt und gibt somit an, dass die Länge des dritten Längendatenfeldes 46 ein Zeichen und damit ein Byte und damit 8 Bit beträgt, so dass das dritte Längendatenfeld 46 maximal 255 Zeichen für die Länge der Datenfelder 20, 25, 30 angeben kann. Die Länge der Datenfelder 20, 25, 30 wird dann bei diesem Beispiel im dritten Längendatenfeld 46 auf den Wert 37 im Hexadezimalsystem gesetzt. Für den Fall, dass die Länge der Datenfelder 20, 25, 30 größer als 255 ist, sind mindestens 2 Bytes für die Längenangabe im dritten Längendatenfeld 46 erforderlich. Entsprechend ist dann der Eintrag im zweiten Längendatenfeld 45 Zwei oder größer zu setzen. Alternativ kann auf das dritte Längendatenfeld 46 verzichtet werden, wenn zwischen dem Bereich 60 mit den Datenfeldern 20, 25, 30 und der elektronischen Postnachricht 1 ein Trennungszeichen vereinbart ist. Dies kann entsprechend der RFC 822 Adressierung beispielsweise eine Leerzeile sein. Ist das dritte Längendatenfeld 46 nicht erforderlich, dann wird das zweite Längendatenfeld 45 entsprechend auf Null gesetzt.

Im Zieladressdatenfeld 20 referenziert das Schlüsselwort "To" mit folgender Zeichenkette aus 27 Zeichen eine als Internet-Adresse ausgebildete zweite Zieladresse für die in diesem Beispiel als Internet-E-Mail ausgebildete elektronische Postnachricht 1:
To=Gunnar.Schmidt@Bosch.com

Im Quelladressdatenfeld 25 referenziert das Schlüsselwort "From" eine ebenfalls als Internet-Adresse ausgebildete Quelladresse zur Identifikation des Senders 125 der elektronischen Postnachricht 1, wobei im Quelladressdatenfeld 25 folgende Zeichenkette aus 23 Zeichen gebildet wird:
From=+49xxxyyyyy@zzz.de

Die Quelladresse ist dabei offensichtlich als eine Telefonnummer umfassende Internet-E-Mail-Adresse ausgebildet und nicht personalisiert. Eine personalisierte Identifikation des Senders 125 der elektronischen Postnachricht 1 ist unter Verwendung des Namensdatenfeldes 35 wie beschrieben möglich, aber in diesem Beispiel nicht vorgesehen.

Im Bezeichnungsdatenfeld 30 ist in diesem Beispiel eine Zeichenkette aus 12 Zeichen vorgesehen, bei der das Schlüsselwort "Subject" die Bezeichnung der elektronischen Postnachricht 1 wie folgt referenziert:
Subject=Test

Weitere Datenfelder sind in diesem Beispiel nicht im Bereich 60 vorgesehen. Insgesamt umfassen in diesem Beispiel die drei verwendeten Datenfelder 20, 25, 30 zweiundsechzig Zeichen, die beispielsweise jeweils mit sieben Bit binär codiert werden, so dass für die Codierung insgesamt 55 Byte erforderlich sind. Dabei entspricht die Zahl 55 im Zehnersystem der Zahl 37 im Hexadezimalsystem und damit dem im dritten Längendatenfeld 46 vorgesehenen Wert.

Da sich die Datenfelder 20, 25, 30 mit den Adress- und Identifikationsdaten im eigentlichen Nachrichtenteil der Kurznachricht 5 befinden, ist beispielsweise eine 7 bit Kodierung der Zeichen gemäß der Veröffentlichung "Alphabets and languago-specific information", GSM 03.38 bzw. 3GPP 23.038 anwendbar.

Im beschriebenen Beispiel werden die einzelnen Datenfelder 20, 25, 30 nicht nur über die Schlüsselwörter eindeutig gekennzeichnet, sondern auch voneinander getrennt. Das bedeutet, dass der Inhalt eines jeden Datenfeldes 20, 25, 30 keine Schlüsselwörter enthalten darf. Diese Forderung wird jedoch gegenstandslos, wenn jedes Datenfeld 20, 25, 30 mit einem Trennungszeichen abgeschlossen wird und vereinbart ist, dass das das jeweilige Datenfeld kennzeichnende Schlüsselwort an den Anfang dieses Datenfeldes gestellt werden muss, so dass nach einem Trennungszeichen das erste nachfolgende Schlüsselwort ein neu beginnendes Datenfeld kennzeichnet und alle nachfolgenden Schlüsselwörter bis zum nächsten Trennungszeichen nicht als Kennzeichnung eines neuen Datenfeldes interpretiert werden. Für das Zieladressdatenfeld 20 könnte dann die Zeichenfolge ausgehend von obigem Beispiel wie folgt ausgebildet sein:
To=Gunnar.Schmidt@Bosch.com<CR>

Beispielhaft wurde hier als Trennungszeichen <CR>, d.h. Wagenrücklauf oder "Carriage Return" gewählt. Dieses verlängert die Zeichenfolge auf insgesamt 28 Zeichen.

Ebenfalls alternativ zum beschriebenen Beispiel können die Zeichen in acht Bit binär codiert werden. Damit vergrößert sich der mögliche Zeichenvorrat, die mögliche Anzahl von Zeichen für die elektronische Postnachricht 1 wird dadurch jedoch weiter verringert. Im beschriebenen Beispiel bleiben für die eigentliche elektronische Postnachricht 1 im Datenteil 50 der Kurznachricht 5 weniger als 100 Zeichen übrig, wenn von einer Kurznachricht 5 nach SMS-Standard und der derzeitigen Begrenzung auf 160 Zeichen pro Kurznachricht in diesem SMS-Standard ausgegangen wird.

Es ist daher vorteilhaft, die Schlüsselwörter der beschriebenen RFC 822-Adressierung beispielsweise mit sieben Bit binär zu codieren, um Zeichen einzusparen. Dies kann über eine vorgegebene Referenztabelle erfolgen, die im Sender 125 und im zweiten Diensteanbieter 150 bekannt ist und beispielsweise folgendermaßen aussieht:

| Schlüsselwort | Binärcode (7 Bit) |
|---|---|
| To: | <0000000> |
| From: | <0000001> |
| Cc: | <0000010> |
| Bcc: | <0000011> |
| Subject: | <0000100> |
| ... | ... |

Neben den bereits beschriebenen Schlüsselwörtern "To", "From" "Subject" enthält die Tabelle als weitere Schlüsselwörter: "Cc" und "Bcc". Außerdem ist in der Tabelle angedeutet, dass außer den beschriebenen noch weitere Schlüsselwörter vorgesehen sein können. Für jedes im Bereich 60 verwendete Schlüsselwort ist dabei in der beschriebenen Weise ein Datenfeld im Bereich 60 vorgesehen. Die Schlüsselwörter "Cc" und "Bcc" kennzeichnen weitere Zieladressen, an die die elektronische Postnachricht 1 im zweiten Kommunikationsnetz 200 zusätzlich zur unter dem Schlüsselwort "To" angegebenen zweiten Zieladresse übertragen werden soll.

Alternativ zum beschriebenen Beispiel können die Schlüsselwörter auch mit acht Bit binär kodiert werden.

Gemäß dem oben beschriebenen Beispiel würde sich durch die Codierung der Schlüsselwörter dann im Bereich 60 folgendes ergeben:
Im ersten Längendatenfeld 40 würde UDHL nach wie vor auf 3 im Hexadezimalsystem gesetzt werden. Im Kennzeichnungsdatenfeld 15 würde IEI nach wie vor auf 20 im Hexadezimalsystem gesetzt werden, um die RFC 822-Adreßierung nach wie vor zu referenzieren. Im zweiten Längendatenfeld 45 würde IEIDL nach wie vor auf Eins im Hexadezimalsystem gesetzt werden. Die Länge der Datenfelder 20, 25, 30 im Bereich 60 wird nun im dritten Längendatenfeld 46 auf 2b im Hexadezimalsystem gesetzt. Durch die Codierung des Schlüsselwortes "To" gemäß der Tabelle mit dem Zeichen <0000000> würde die Zeichenfolge im Zieladressdatenfeld 20 nunmehr 25 Zeichen umfassen und wie folgt aussehen:
   <0000000>Gunnar.Schmidt@Bosch.com
Durch die Codierung des Schlüsselwortes "From" mit dem Zeichen <0000001> gemäß der Tabelle würde das Quelladressdatenfeld 25 nunmehr eine Zeichenfolge mit 19 Zeichen umfassen und wie folgt aussehen:
   <0000001>+41xxxyyyyy@zzz.de
Durch die Codierung des Schlüsselwortes "Subject" durch das Zeichen <0000100> gemäß der Tabelle würde das Bezeichnungsdatenfeld 30 nunmehr eine Zeichenfolge mit fünf Zeichen umfassen und wie folgt aussehen:
   <0000100>Test

Somit ergeben sich für die verwendeten Datenfelder 20, 25, 30 nunmehr 49 Zeichen, die bei Binärcodierung mit jeweils 7 Bit 43 Bytes beanspruchen würden, wobei die Zahl 43 im Zehnersystem der Zahl 2b im Hexadezimalsystem und damit dem im dritten Längendatenfeld 46 vorgesehenen Wert entspricht.

Auf diese Weise können Zeichen eingespart werden, die der elektronischen Postnachricht 1 zur Verfügung gestellt werden können.

Der Wert 3 für UDHL gibt an, dass für die erste Kopfinformation 11 im Datenteil 50, also für das erste Längendatenfeld 40, das zweite Längendatenfeld 45, das dritte Längendatenfeld 46 und das Kennzeichnungsdatenfeld 15 insgesamt maximal 3Bytes, also 24 Binärstellen zur Verfügung stehen.

Es kann nun vorgesehen sein, dass neben der ersten Kopfinformation 11 mindestens eine dritte Kopfinformation 13 mit der Kurznachricht 5 übertragen wird, die die elektronische Postnachricht 1 als Teil einer mittels Übertragung mehrerer Kurznachrichten verketteten gesamten elektronischen Postnachricht 1 kennzeichnet. Die Reihenfolge zwischen der ersten Kopfinformation 11 und der dritten Kopfinformation 13 kann auch vertauscht sein. Lediglich die zweite Kopfinformation 12 sollte am Anfang der Kurznachricht 5 stehen. Auch weitere Kopfinformationen können der Kurznachricht 5 hinzugefügt werden in beliebiger Reihenfolge mit der ersten Kopfnachricht 11 und gegebenenfalls der dritten Kopfnachricht 13, wobei die zweite Kopfinformation 12 immer am Anfang der Kurznachricht 5 stehen muss.

Die dritte Kopfinformation 13 ist optional vorgesehen. Figur 3 zeigt ausgehend vom Beispiel nach Figur 2 eine Kurznachricht 5 mit integrierter dritter Kopfinformation 13. Dabei kennzeichnen gleiche Bezugszeichen gleiche Elemente wie in Figur 2. Der Aufbau der Kurznachricht gemäß Figur 3 entspricht dabei dem für das Beispiel nach Figur 2 beschriebenen Aufbau mit dem Unterschied, dass die dritte Kopfinformation 13 im Beispiel nach Figur 3 nun zusätzlich in der Kurznachricht 5 zwischen der ersten Kopfinformation 11 und dem Bereich 60 angeordnet ist. Die dritte Kopfinformation 13 unterscheidet sich von der ersten Kopfinformation 11 auf jeden Fall durch den Identifikator im Kennzeichnungsdatenfeld 15. Anhand dieses Identifikators kann der zweite Diensteanbieter 150 die erste Kopfinformation 11 von der dritten Kopfinformation 13 unterscheiden.

Die dritte Kopfinformation 13 muss außerdem eine Kennung enthalten, die die gesamte elektronische Postnachricht kennzeichnet. Im zweiten Diensteanbieter 150 werden dann sämtliche mittels Kurznachrichten eingegangene elektronische Postnachrichten miteinander zu der gesamten elektronischen Postnachricht verkettet, die durch die Kennung dieser gesamten elektronischen Postnachricht referenziert sind und in dieser Form als verkettete gesamte elektronische Postnachricht zum gemäß der zweiten Zieladresse im Zieladressdatenfeld 20 adressierten Empfänger 175 im zweiten Kommunikationsnetz 200 übertragen. Dabei kann die dritte Kopfinformation 13 auch eine Reihenfolgennummer enthalten, die angibt, an welcher Stelle die elektronische Postnachricht 1 der jeweiligen Kurznachricht 5 in der verketteten gesamten elektronischen Postnachricht steht, so dass mehrere auf diese Weise gekennzeichnete elektronische Postnachrichten im zweiten Diensteanbieter 150 in der richtigen Reihenfolge miteinander verkettet werden können. Dabei kann es auch vorgesehen sein, für die Kennzeichnung der gesamten elektronischen Postnachricht und für die Kennzeichnung der Reihenfolgennummer der jeweiligen elektronischen Postnachricht jeweils eine eigene Kopfinformation in der Kurznachricht 5 vorzusehen und mit einem entsprechenden Identifikator im Kennzeichnungsdatenfeld 15 voneinander zu unterscheiden.

Durch Auswertung der Datenfelder 20, 25, 30, 35 ist der zweite Diensteanbieter 150 in der Lage, aus der Kurznachricht 5 die elektronische Postnachricht 1 aus dem Datenteil 50 zu extrahieren, da die erste Kopfinformation 11 und gegebenenfalls weitere Kopfinformationen des Datenteils 50, wie beispielsweise auch die dritte Kopfinformation 13 und schließlich auch der Bereich 60 den Nutzdaten im Datenteil 50 stets vorangestellt werden und jeweils mindestens ein Längendatenfeld aufweisen, aus dem ihre Länge und im Falle der ersten Kopfinformation 11 auch die Länge des Bereichs 60 ermittelt werden kann. Es kann auch vorgesehen sein, dass nur in der ersten Kopfinformation 11 mittels Längendatenfeldem Längenangaben über sämtliche im Datenteil 50 vorhandenen Kopfinformationen 11, 13 und Datenfelder 20, 25, 30, 35 gemacht werden, so dass entsprechende Längendatenfelder in den weiteren Kopfinformationen des Datenteils 50 und dem Bereich 60 nicht erforderlich sind. Dazu kann es vorgesehen sein, dass das erste Längendatenfeld 40 der ersten Kopfinformation 11 die Gesamtlänge aller Kopfinformationen 11, 13 des Datenteils 50 angibt. Aus dem Bereich 60 mit den Datenfeldern 20, 25, 30, 35 werden dann außerdem die für die Adressierung und Identifikation der elektronischen Postnachricht 1 erforderlichen Informationen gewonnen, die für die Übertragung der extrahierten elektronischen Postnachricht 1 im zweiten Kommunikationsnetz 200 an den dort adressierten Empfänger 175 und die Identifikation des Senders 125 beim Empfänger 175 erforderlich sind. Für die reine Übertragung der elektronischen Postnachricht 1 an den Empfänger 175 des zweiten Kommunikationsnetzes 200 ist im Bereich 60 von den verwendbaren Datenfeldern nur das Zieladressdatenfeld 20 unabdingbar. Das Quelladressdatenfeld 25 und das Namensdatenfeld 35 dienen lediglich der Identifikation des Senders 125 und das Bezeichnungsdatenfeld 30 dient lediglich der Betitelung und damit der Identifikation der elektronischen Postnachricht 1 selbst. Aus der dritten Kopfinformation 13, deren Vorhandensein ebenfalls durch einen entsprechenden Signalisierungseintrag in der zweiten Kopfinformation 12 referenziert wird, kann der zweite Diensteanbieter 150 erkennen, ob die elektronische Postnachricht 1 Teil einer gesamten zu verkettenden elektronischen Postnachricht gehört. Anhand einer weiteren in der Figur 2 nicht dargestellten Kopfinformation, deren Vorhandensein ebenfalls durch einen entsprechenden Signalisierungseintrag in der zweiten Kopfinformation 12 referenziert wird, kann der zweite Diensteanbieter 150 erkennen, an welcher Stelle der zu verkettenden gesamten elektronischen Postnachricht die elektronische Postnachricht 1 der Kurznachricht 5 steht, sofern diese Angabe nicht bereits in der dritten Kopfinformation 13 enthalten ist.

Entsprechend der ermittelten Position der elektronischen Postnachricht 1 in der zu verkettenden gesamten elektronischen Postnachricht kann dann der zweite Diensteanbieter 150 die elektronische Postnachricht 1 der Kurznachricht 5 an der entsprechenden Stelle der zu verkettenden gesamten elektronischen Postnachricht einbauen.

Das erfindungsgemäße Verfahren ist nicht auf den SMS-Kurznachrichtendienst im GSM-Mobilfunknetz begrenzt, sondern für beliebige Kurznachrichtendienste anwendbar, bei denen elektronische Postnachrichten mit Kurznachrichten übertragen werden, wobei es sich bei der elektronischen Postnachricht auch nicht um eine Internet-E-Mail handeln muss.

## Patentansprüche

1. Verfahren zur Übertragung von elektronischen Postnachrichten (1) unter Verwendung eines Kurznachrichtendienstes, wobei
mit einer Kurznachricht (5) in einem ersten Kommunikationsnetz (100) eine elektronische Postnachricht (1) sowie Adress- und/oder Identifikationsdaten für die Übertragung der elektronischen Postnachricht (1) in einem zweiten Kommunikationsnetz (200) übertragen werden, wobei
die Kurznachricht (5) eine zweite Kopfinformation (12) und ein Datenteil (50) umfasst, wobei
ein Signalisierungseintrag in der zweiten Kopfinformation (12) das Vorhandensein einer ersten Kopfinformation (11) im Datenteil (50) anzeigt, wobei
die erste Kopfinformation (11) eine Signalisierung des Vorhandenseins mindestens eines Datenfeldes (20, 25, 30, 35), das die Adress- und/oder Identifikationsdaten umfasst, aufweist und wobei
jedes des mindestens einen Datenfeldes (20, 25, 30, 35) durch jeweils ein Schlüsselwort für die Übertragung im Datenteil (50) gekennzeichnet wird und
jedes Schlüsselwort an den Anfang des zugehörigen Datenfeldes (20, 25, 30 ,35) gestellt wird,
**dadurch gekennzeichnet, dass**
das mindestens eine Datenfeld (20, 25, 30, 35) im Datenteil (50) außerhalb der ersten Kopfinformation (11) und der zweiten Kopfinformation (12) übertragen wird.

2. Verfahren nach Anspruch 1, wobei mit der ersten Kopfinformation (11) ein Kennzeichnungsfeld (15), das die Signalisierung des Vorhandenseins des mindestens einen Datenfeldes (20, 25, 30, 35) umfasst, übertragen wird.

3. Verfahren nach Anspruch 2, wobei das Kennzeichnungsdatenfeld (15) die Form der Adress- und/oder Identifikationsdaten angibt.

4. Verfahren nach einem der vorherigen Ansprüche, wobei das mindestens eine Datenfeld (20, 25, 30, 35) im Datenteil (50) der elektronischen Postnachricht (1) unmittelbar vorangestellt übertragen wird.

5. Verfahren nach einem der vorherigen Ansprüche, wobei im Datenteil (50) mindestens ein Zieladressdatenfeld (20), das eine Zieladresse der elektronischen Postnachricht (1) umfasst, übertragen wird.

6. Verfahren nach einem der vorherigen Ansprüche, wobei im Datenteil (50) ein Quelladressdatenfeld (25), das die Quelladresse der elektronischen Postnachricht (1) umfasst, übertragen wird.

7. Verfahren nach einem der vorherigen Ansprüche, wobei im Datenteil (50) ein Bezeichnungsdatenfeld (30), das eine Bezeichnung der elektronischen Postnachricht (1) umfasst, übertragen wird.

8. Verfahren nach einem der vorherigen Ansprüche, wobei im Datenteil (50) ein Namensdatenfeld (35), das einen Namen des Absenders der elektronischen Postnachricht (1) umfasst, übertragen wird.

9. Verfahren nach einem der vorherigen Ansprüche, wobei mindestens eine dritte Kopfinformation (13) mit der Kurznachricht (5), die die elektronische Postnachricht (1) als Teil einer mittels Übertragung mehrerer Kurznachrichten verketteten gesamten elektronischen Postnachricht (1) kennzeichnet, übertragen wird.

10. Verfahren nach einem der vorherigen Ansprüche, wobei das Ende des mindestens einen Datenfeldes (20, 25, 30, 35) durch ein Trennungszeichen gekennzeichnet wird.

11. Verfahren nach einem der vorherigen Ansprüche, wobei mit der ersten Kopfinformation (11) ein Längendatenfeld (46), das die Länge des mindestens einen Datenfeldes (20, 25, 30, 35) angibt, übertragen wird.

12. Verfahren nach einem der vorherigen Ansprüche, wobei das mindestens eine-Datenfeld (20, 25, 30, 35) durch ein Trennungszeichen von der elektronischen Postnachricht (1) getrennt übertragen wird.

## Claims

1. Method for transmitting electronic mail messages (1) by using a short message service, wherein
a short message (5) is used in a first communication network (100) to transmit an electronic mail message (1) and also address and/or identification data for the transmission of the electronic mail message (1) in a second communication network (200), wherein
the short message (5) comprises a second piece of header information (12) and a data portion (50), wherein
a signalling entry in the second piece of header information (12) indicates the presence of a first piece of header information (11) in the data portion (50), wherein
the first piece of header information (11) has signalling for the presence of at least one data field (20, 25, 30, 35) that comprises the address and/or identification data and wherein
each of the at least one data field (20, 25, 30, 35) is **characterized by** a respective keyword for the transmission in the data portion (50) and
each keyword is placed at the beginning of the associated data field (20, 25, 30, 35)
**characterized in that**
the at least one data field (20, 25, 30, 35) is transmitted in the data portion (50) outside the first piece of header information (11) and the second piece of header information (12).

2. Method according to Claim 1, wherein the first piece of header information (11)is used to transmit a flag field (15) which comprises the signalling of the presence of the at least one data field (20, 25, 30, 35).

3. Method according to Claim 2, wherein the flag data field (15) specifies the form of the address and/or identification data.

4. Method according to one of the preceding claims, wherein the at least one data field (20, 25, 30, 35) is transmitted in the data portion (50) of the electronic mail message (1) in a directly preceding position.

5. Method according to one of the preceding claims, wherein the data portion (50) is used to transmit at least one destination address data field (20) which comprises a destination address for the electronic mail message (1).

6. Method according to one of the preceding claims, wherein the data portion (50) is used to transmit a source address data field (25) which comprises the source address of the electronic mail message (1).

7. Method according to one of the preceding claims, wherein the data portion (50) is used to transmit a title data field (30) which comprises a title for the electronic mail message (1).

8. Method according to one of the preceding claims, wherein the data portion (50) is used to transmit a name data field (35) which comprises a name for the sender of the electronic mail message (1).

9. Method according to one of the preceding claims, wherein at least one third piece of header information (13) is transmitted with the short message (5), said third piece of header information flagging the electronic mail message (1) as part of a whole electronic mail message (1) that is concatenated by means of the transmission of a plurality of short messages.

10. Method according to one of the preceding claims, wherein the end of the at least one data field (20, 25, 30, 35) is flagged by a separation character.

11. Method according to one of the preceding claims, wherein the first piece of header information (11) is used to transmit a length data field (46) which specifies the length of the at least one data field (20, 25, 30, 35).

12. Method according to one of the preceding claims, wherein the at least one data field (20, 25, 30, 35) is transmitted in a form separated from the electronic mail message (1) by a separation character.

## Revendications

1. Procédé de transmission de messages de courrier électronique (1) par utilisation d'un service de messages courts, dans lequel
un message de courrier électronique (1) ainsi que des données d'adresse et/ou d'identification sont transmis avec un message court (5) dans un premier réseau de communication (100) pour la transmission du message de courrier électronique (1) dans un deuxième réseau de communication (200),
le message court (5) comprend une deuxième information d'entête (12) et une partie de données (50),
une entrée de signalisation dans la deuxième information d'entête (12) indique la présence d'une première information d'entête (11) dans la partie de données (50),
la première information d'entête (11) comprend une signalisation de la présence d'au moins un champ de données (20, 25, 30, 35) qui comporte les données d'adresse et/ou d'identification, et
chacun des au moins un champ de données (20, 25, 30, 35) est **caractérisé par** un mot-clé respectif pour la transmission dans la partie de données (50) et
chaque mot-clé est placé au début du champ de données (20, 25, 30, 35) associé,
**caractérisé en ce que**
l'au moins un champ de données (20, 25, 30, 35) est transmis dans la partie de données (50) à l'extérieur de la première information d'entête (11) et de la deuxième information d'entête (12).

2. Procédé selon la revendication 1, un champ de caractérisation (15) qui comprend la signalisation de la présence de l'au moins un champ de données (20, 25, 30, 35) étant transmis avec la première information d'entête (11).

3. Procédé selon la revendication 2, le champ de données de caractérisation (15) fournissant la forme des données d'adresse et/ou d'identification.

4. Procédé selon l'une quelconque des revendications précédentes, l'au moins un champ de données (20, 25, 30, 35) étant transmis directement en préambule dans la partie de données (50) du message de courrier électronique (1).

5. Procédé selon l'une quelconque des revendications précédentes, au moins un champ de données d'adresse cible (20) comprenant une adresse cible du message de courrier électronique (1) étant transmis dans la partie de données (50).

6. Procédé selon l'une quelconque des revendications précédentes, un champ d'adresse source (25) comprenant l'adresse source du message de courrier électronique (1) étant transmis dans la partie de données (50).

7. Procédé selon l'une quelconque des revendications précédentes, un champ de données de désignation (30) comprenant une désignation du message de courrier électronique (1) étant transmis dans la partie de données (50).

8. Procédé selon l'une quelconque des revendications précédentes, un champ de données de nom (35) comprenant un nom de l'émetteur du message de courrier électronique (1) étant transmis dans la partie de données (50).

9. Procédé selon l'une quelconque des revendications précédentes, au moins une troisième information d'entête (13) étant transmise avec le message court (5), celle-ci caractérisant le message de courrier électronique (1) en tant que partie d'un message de courrier électronique (1) global chaîné par transmission d'une pluralité de messages courts.

10. Procédé selon l'une quelconque des revendications précédentes, la fin de l'au moins un champ de données (20, 25, 30, 35) étant **caractérisée par** un symbole de séparation.

11. Procédé selon l'une quelconque des revendications précédentes, un champ de données de longueur (46) fournissant la longueur de l'au moins un champ de données (20, 25, 30, 35) étant transmis avec la première information d'entête (11).

12. Procédé selon l'une quelconque des revendications précédentes, l'au moins un champ de données (20, 25, 30, 35) étant transmis de manière séparée du message de courrier électronique (1) par un symbole de séparation.
